# EUROPÄISCHE PATENTSCHRIFT

(11) **EP 3 071 340 B1**
(45) Veröffentlichungstag und Bekanntmachung des Hinweises auf die Patenterteilung: **23.06.2021**
(21) Anmeldenummer: 14801991.2
(22) Anmeldetag: 17.11.2014
(51) Int. Cl.: B07C 5/342

(54) **VERFAHREN UND VORRICHTUNG ZUM SORTIEREN VON OBJEKTEN**
METHOD AND APPARTUS FOR SORTING OBJECTS
PROCÉDÉ ET DISPOSITIF DE TRI D'OBJETS

(30) Priorität: 21.11.2013 DE 102013223768
(43) Veröffentlichungstag der Anmeldung: 28.09.2016
(73) Patentinhaber: Siemens Aktiengesellschaft, 80333 München (DE)
(72) Erfinder: LI, Zhe, 78467 Konstanz (DE); SCHULTE-AUSTUM, Matthias, 78315 Radolfzell (DE); KRECH, Dietmar, 67659 Kaiserslautern (DE); PAETSCH, Holger, 15758 Zernsdorf (DE); RAUH, Ingolf, 78479 Reichenau (DE); VON DER NÜLL, Stephan, 78464 Konstanz (DE)
(74) Vertreter: Siemens Patent Attorneys
(86) Internationale Anmeldenummer: PCT/EP2014/074715
(87) Internationale Veröffentlichungsnummer: WO 2015/074985

(56) Entgegenhaltungen:
- EP-A2- 0 569 689
- EP-A2- 1 645 866
- EP-A2- 2 138 242
- DE-A1- 3 841 972
- DE-A1-102005 007 492
- DE-A1-102006 003 325
- DE-A1-102007 038 836

## Beschreibung

Die Erfindung betrifft ein Verfahren sowie eine Vorrichtung zum Zuordnen von Objekten zu Objektklassen.

Einzelhandelsprodukte werden üblicherweise aus einem Warenlager mit LKWs zu Einzelhandelsgeschäften gefahren. In den Warenlagern werden die Produkte zusammengestellt, in Transportbehälter gestapelt und diese werden in die LKW bewegt. Zum Zusammenstellen der Waren für einen LKW werden die Waren in Gebinden aus Hochregallagern entnommen und mit Hilfe von Transportmitteln, beispielsweise Gabelstaplern, zu einem Sammelplatz bewegt und dort für den LKW zusammengestellt.

EP-A-2 138 242 offenbart ein Verfahren zum Erkennen von Transportbehältnissen, insbesondere von Getränkekästen und/oder -flaschen, die jeweils mit mindestens einer grafischen Kennzeichnung versehen sind. Dabei wird von der grafischen Kennzeichnung, die z.B. ein Label oder Logo sein kann, eine digitale Bildaufnahme gemacht und daraus eine Bilddatenmatrix erstellt.

EP-A-0 569 689 offenbart ein Verfahren und eine Vorrichtung zum Sortieren von Flaschen, bei denen die Flaschen in Kästen zugeführt werden, auf ihre Zugehörigkeit zu mindestens einer bestimmten Sorte hin überprüft, zumindest teilweise aus den Kästen entnommen und nach Sorten getrennt wieder in Kästen eingesetzt werden. Es wird vorgeschlagen, die entnommenen Flaschen mittels einer steuerbaren Greifvorrichtung direkt, d.h. ohne Zwischenspeicherung, von Kasten zu Kasten umzusetzen. Dadurch können bei geringem Platz- und Kostenaufwand und bei störungsarmem Flaschentransport sortenreine Kästen erzeugt werden.

Es ist eine Aufgabe der vorliegenden Erfindung, ein Verfahren und eine Vorrichtung zum zügigen Zuordnen von Objekten zu Objektklassen anzugeben.

Diese Aufgabe wird durch ein Verfahren nach dem unabhängigen Anspruch 1 gelöst, bei dem insbesondere ein Objekt optisch aufgenommen wird, aus den daraus gewonnenen optischen Daten eine das Objekt beschreibende Objektcharakteristik geschaffen und die Objektcharakteristik mit mehreren Klassencharakteristiken verglichen wird, die jeweils für eine von mehreren Objektklassen charakteristisch sind, und das Objekt in Abhängigkeit vom Vergleichsergebnis zumindest einer Objektklasse zugeordnet wird.

Die Erfindung geht von der Überlegung aus, dass das Zusammenstellen von Waren in z.B. einem Frachtzentrum oder Warenlager für einen oder mehrere LKW vereinfacht werden kann, wenn die Waren mittels Bilderkennungsverfahren soweit erkannt werden, dass sie einer Warenklasse, oder allgemein gesprochen: einer Objektklasse, zugeordnet werden können. Hierdurch können eine Vielzahl von für mehrere LKW vorgesehene Waren auf ein Transportband gegeben werden, die Waren werden erkannt und einer Warenklasse zugewiesen, die wiederum mit einem LKW verbunden ist. Die erkannte und der Warenklasse zugewiesene Ware kann automatisiert sortiert und dem LKW entsprechend zugeführt werden. Beispielsweise werden auf ein Transportband in einem Warenlager so viele Waren einer Klasse aufgelegt wie gerade zur Kommissionierung für alle Filialen einer Einzelhandelskette nötig sind. Ebenso wird mit einer Vielzahl von Waren verfahren, so dass auf das Band jeweils mehrere oder einzelne Waren verschiedener Warenklassen an unterschiedlichen Stellen auf das Band aufgelegt werden. An einer Stelle des Bandes, hinter der keine Waren mehr hinzukommen, z.B. vor der ersten Bandweiche, die den Warenstrom auf mehrere Bänder für mehrere LKW aufteilt, muss für jede Ware die Warenklasse bestimmt werden, damit der Sortierer die korrekte Art und Menge an Waren für jeden einzelnen LKW sortieren kann.

Die Objekte können Waren, insbesondere Warengebinde sein, die jeweils mehrere durch eine Verpackung zusammen gehaltene Elemente, wie Einzelwaren, enthalten. Ein solches Gebinde kann ein Karton mit mehreren Konservendosen, eine Anzahl von Flaschen in einer Umverpackung, mehrere von einer Folie zusammen gehaltene Packungen Toilettenpapier oder dergleichen sein. Vorteilhafterweise enthält ein Warengebinde mehrere gleiche Einzelwaren, die insbesondere identisch zueinander sind. Die Erfindung ist jedoch auch anwendbar für andere zu sortierende Objekte, beispielsweise Gepäckstücke, die in einer Gepäcksortieranlage auf mehrere Flugzeuge sortiert werden, Pakete oder andere zu sortierende Produkte beziehungsweise Waren.

Vorteilhafterweise ist für jeden Warentyp genau eine Objektklasse vorhanden, so dass ein Warentyp eindeutig einer einzigen Objektklasse zugeordnet werden kann. Möglich ist auch, dass für einen Warentyp mehrere Objektklassen vorhanden sind. So kann es vorkommen, dass ein Hersteller ein Produkt vollständig gleich belässt und nur die Umverpackung etwas ändert, wobei sogar ein Barcode unverändert bleiben kann. In diesem Fall sind die Objekte optisch verschieden aber inhaltlich, also vom Warentyp her, identisch. Jedes der beiden optisch verschiedenen aber inhaltlich gleichen Objekte bildet nun eine Warenklasse, oder allgemeiner: Objektklasse. Ein Warentyp bzw. Objekttyp enthält also zweckmäßigerweise alle inhaltlich gleiche Waren bzw. Objekte, die jedoch optisch verschieden sein können. Jede Warenklasse oder Objektklasse enthält nur inhaltlich und optisch gleiche Waren bzw. Objekte.

Vorteilhafterweise beschreiben die Objektklassen eine spezifische Ware bzw. Warenklasse, insbesondere genau eine einzige spezifische Ware bzw. Warenklasse. Eine Warenklasse oder ein Warentyp kann ein bestellbares Produkt sein, insbesondere ein Gebinde aus Einzelwaren, wobei zwei Produkte einer Warenklasse zweckmäßigerweise inhaltlich wie optisch identisch zueinander sind und Waren mit verschiedener Bestellnummer zweckmäßigerweise stets verschiedenen Warenklassen bzw. Objektklassen zugeordnet sind. Eine Objektklasse kann also mehrere Objekte umfassen, die jedoch identisch ausgeführt sein müssen. Die Identität umfasst zweckmäßigerweise alle Merkmale des Objekts, gegebenenfalls bis auf einen Identitätscode, der beispielsweise eine Herstellungszeit angibt und/oder eine Produktrückverfolgung ermöglicht. Ein Objekt ist beispielsweise ein Gebinde mit einer Anzahl Einzelwaren einer Herstellerfirma und einer Art, wie ein Karton mit zwölf Dosen Ravioli einer Herstellerfirma und einer Sorte.

Jede Objektklasse weist zweckmäßigerweise genau eine Klassencharakteristik auf. Jede Klassencharakteristik ist hierbei also genau einer Objektklasse zugeordnet. Zur Erstellung von Klassencharakteristiken wird ein Objekt oder eine Mehrzahl von identischen Objekten aufgenommen, zweckmäßigerweise jeweils von mehreren Richtungen, insbesondere mit mehreren Kameras. Solche Objekte sind zwar von ihrer Art her identisch, können jedoch leichte Form- oder Farbunterschiede aufweisen, beispielsweise wenn ein Karton leicht Dellen oder Kratzer aufweist oder von außen verschmutzt ist. Aus den Aufnahmen der mehreren identischen Objekte wird eine Klassencharakteristik zu diesen Objekten, also zu diesem Objekttyp erstellt, die beispielsweise Formmerkmale, Farbmerkmale, Glanzmerkmale, Mustermerkmale, Zeichenmerkmale und/oder ID-Merkmale, wie einen Barcode, aufweist. Da die identischen Objekte durch Beschädigung oder Verschmutzung eine Merkmalsvarianz aufweisen können, ist jeder Klassencharakteristik eine Merkmalsvarianz zugeordnet, so dass die Objektklasse auch leicht beschädigte und/oder verschmutzte Objekte ihres Objekttyps erfasst.

Für die Zuordnung der einzelnen Objekte zu den Objektklassen werden auch die zu Klassifizierung vorgesehenen Objekte zweckmäßigerweise jeweils aus mehreren Richtungen, insbesondere mit mehreren Kameras, aufgenommen und auf diesen Aufnahmen wird für jedes Objekt eine Objektcharakteristik geschaffen. Jede Objektcharakteristik wird mit mehreren Klassencharakteristiken, insbesondere den Charakteristiken aller Klassen, verglichen und bei erfolgreicher Klassifizierung zweckmäßigerweise derjenigen Klasse zugeordnet, deren Klassencharakteristik die größte Übereinstimmung mit der Objektcharakteristik aufweist.

Eine vorteilhafte Ausführungsform der Erfindung sieht vor, dass die Objekte Gebinde aus mehreren im Gebinde zusammenhängend verpackten, Einzelwaren sind, insbesondere gleiche Einzelwaren, und die Objektklassen Gebindetypen sind. Ein Gebindetyp weist hierbei zweckmäßigerweise nur ein einziges Gebinde auf und solche Gebinde, die mit diesem Gebinde identisch sind. Durch die Zuordnung eines Gebindes zum Gebindetyp kann ermittelt werden, um welche Waren es sich im Gebinde handelt, und das Gebinde kann automatisiert sortiert werden, beispielsweise auf ein von mehreren Transporteinheiten.

Da Hersteller immer wieder die Optik einer Ware ändern, geschieht es häufig, dass ein neues Objekt auf dem Transportband liegt. Seine Objektcharakteristik kann keiner bestehenden Klassencharakteristik zugeordnet werden. Eine Sortierung kann nun erfolgen, indem die Objektcharakteristik des neuen Objekts von einem Bediener, z.B. über Videocoding, einer Warenklasse zugeordnet wird. Die Objektcharakteristik kann dann in eine Klassencharakteristik umgewandelt werden und den Satz der bestehenden Klassencharakteristiken eingefügt werden, so dass ein neuer Satz mit einer zusätzlichen Klassencharakteristik entsteht. Allgemeiner formuliert, wird aus einem einzigen neuen Objekt - bzw. einer oder mehreren Aufnahmen des Objekts - eine Klassencharakteristik gebildet und in einen bestehenden Satz von Klassencharakteristiken eingefügt. Die bestehenden Klassencharakteristiken bleiben hierbei zweckmäßigerweise unverändert. Sie können mit der neuen Klassencharakteristik einen neuen Satz bilden, so dass der Vergleich mit dem neuen Satz ausgeführt werden kann. Auf diese Weise können neue Waren schnell und einfach erkannt werden.

Das Einfügen einer neuen Klassencharakteristik in einen Satz bestehender Klassencharakteristiken kann einfach gehalten werden, wenn die Objektcharakteristik und die Klassencharakteristiken jeweils ein Gebilde, insbesondere einen Punkt, in einem mehrdimensionalen Merkmalsraum bilden und der Vergleich einen Abstand des Gebildes bzw. Punkts der Objektcharakteristik zu den Gebilden bzw. Punkten der Klassencharakteristiken berücksichtigt. Auf eine Veränderung der bestehenden Klassencharakteristiken bei Einfügen einer neuen Klassencharakteristik in den Satz kann verzichtet werden.

Außerdem wird vorgeschlagen, dass die Objektcharakteristik mehrere Objektmerkmale enthält und die Klassencharakteristiken jeweils mehrere Klassenmerkmale enthalten. Objektmerkmale und Klassenmerkmale sind Merkmalstypen zugeordnet, z.B. Form, Farbe, Volumen, Zeichen und dergleichen. Die Objektmerkmale können mit denjenigen Klassenmerkmalen verglichen werden, die vom gleichen Merkmalstyp sind. Hierbei ist zweckmäßigerweise jedem Objektmerkmalstyp genau ein Klassenmerkmalstyp zugeordnet, so dass ein direkter Vergleich einander zugeordneter Merkmale möglich ist.

Vorteilhafterweise wird für den Vergleich jedes der Objektmerkmale jeweils einem Merkmalstyp zugewiesen, der mehrere Elemente umfasst, die in ihrer Gesamtheit einen insbesondere abgeschlossenen Merkmalssuchraum bilden. Jedes Objektmerkmal kann im Merkmalssuchraum seines Merkmalstyps gesucht werden. Es kann eine Merkmalskandidatenliste mit mehreren Merkmalskandidaten erstellt werden, die jeweils mit einem Ähnlichkeitswert versehen sind.

Die Objektmerkmale können als ein Vektor aus mehreren Vektorelementen gruppiert sein, wobei ein Vektor die vollständige Objektcharakteristik darstellt. Jedes Objektmerkmal kann als ein Vektorelement dargestellt werden, die insgesamt zu einem Gesamtvektor oder zu mehreren Einzelvektoren zusammengefasst sind, die in ihrer Gesamtheit wiederum die Objektcharakteristik bilden. Der Vektor legt einen Punkt im Eigenschaftsraum fest, der zweckmäßigerweise insgesamt oder teilweise von der Summe der Klassencharakteristiken aufgespannt wird.

Die Zuverlässigkeit der Klassifizierung kann erhöht werden, wenn den Klassenmerkmalen unterschiedliche Gewichtungen zugewiesen sind. Ein Ergebnis eines Merkmalvergleichs kann mit der Gewichtung gewichtet werden, so dass beispielsweise zuverlässige Merkmale oder Merkmale mit einer geringen Varianz ein größeres Gewicht erhalten als unzuverlässigere Merkmale oder Merkmale mit einer größeren Varianz. Die Gewichtung kann allgemein sein, so dass unabhängig vom Objekt beziehungsweise der Klasse ein Merkmalstyp generell eine größere Gewichtung bekommt als andere. Die Gewichtung kann jedoch auch klassenabhängig sein, so dass die Gewichtung eines Merkmals von Klasse zu Klasse unterschiedlich ist.

Insbesondere bei Einzelhandelswaren kann es vorkommen, dass gleiche Waren in unterschiedlich großen Gebinden verkauft werden. Um solche unterschiedlichen Gebinde unterscheiden zu können, ist es vorteilhaft, wenn Gesamtmerkmale des Gebindeabbildes höher gewichtet werden, als Merkmale der Einzelwaren. Gesamtmerkmale sind Merkmale des Gebindes, die einer Einzelware fehlen, insbesondere Merkmale des Gebindes als Ganzem. Beispielsweise werden die Merkmale der Gebindeverpackung höher gewichtet, als Merkmale der Einzelwaren. Hierdurch kann vermieden werden, dass zwar die Einzelwaren einwandfrei erkannt werden, die Gebindegröße jedoch als nicht so wesentliches Merkmal vernachlässigt und daher falsch klassifiziert wird. Es ist auch möglich, die Merkmale der Einzelwaren zu unterdrücken, die Gewichtung also auf Null zu setzen.

Weiter ist es vorteilhaft, wenn ein Schriftmerkmal auf einer Verpackung höher gewichtet wird, als ein Formmerkmal des Objekts. Ein Schriftmerkmal kann ein sehr zuverlässig erkennbares Merkmal sein, dass außerdem eine hohe Aussagekraft hinsichtlich der Klassifizierung hat. Das Schriftmerkmal muss kein Merkmal sein, das das Objekt direkt beschreibt, sondern kann das Objekt nur indirekt beschreiben, beispielsweise eine Gewichtangabe, ein Name eines Verpackungsherstellers oder Nährwertangaben. Mit gleichem Vorteil wird ein ID-Code-Merkmal, beispielsweise ein Barcode, auf einer Umverpackung - z.B. einer Gebindeumverpackung - höher gewichtet als ein Schriftmerkmal auf der Umverpackung.

Insbesondere bei Waren kann es vorkommen, dass ein Hersteller mehrere sehr ähnlich aussehende Gebinde unterschiedlichen Warentyps liefert, beispielsweise Kartons mit Tütensuppen verschiedener Geschmacksrichtungen. Diese Objekte können gleiche optische Merkmale aufweisen, die an sich sehr unterscheidungskräftig sind, und hoch gewichtet werden könnten, doch in diesem Fall nicht für eine Unterscheidung geeignet sind. Um dennoch zu einer zuverlässigen Unterscheidung zu gelangen, ist es vorteilhaft, wenn die Objektmerkmale reziprok zur Häufigkeit ihres Vorkommens in den Klassencharakteristiken gewichtet werden. Das Vorkommen in den Klassencharakteristiken bezieht sich zweckmäßigerweise nur auf eine Untermenge von Klassencharakteristiken, also nur einen Teil der Menge aller Klassencharakteristiken, insbesondere nur auf diejenigen Klassencharakteristiken, die ein einer Vorauswahl als zum Objekt ähnliche Klassencharakteristiken gefunden wurden.

Eine weitere vorteilhafte Ausführungsform der Erfindung sieht vor, dass aus dem Vergleich von einzelnen Objektmerkmalen und/oder Objektmerkmalsgruppen jeweils ein Klassifizierungsergebnis ermittelt wird, so dass mehrere Klassifizierungsergebnisse gewonnen werden. Aus den einzelnen Klassifizierungsergebnissen kann ein Gesamtergebnis gewonnen werden. Hierbei werden die einzelnen Klassifizierungsergebnisse zweckmäßigerweise gewichtet und in gewichteter Form in das Gesamtergebnis eingebracht, oder die Gewichtung ist bereits in den Klassifizierungsergebnissen enthalten.

Vorteilhafterweise sind zumindest einige der Objektmerkmale in Gruppen zusammengefasst, wobei diese Merkmale jeweils gruppenweise mit entsprechenden Klassenmerkmalen verglichen werden und zumindest ein Gruppenvergleichsergebnis gewonnen wird. Dies ist besonders vorteilhaft anwendbar bei gleichartigen Objektmerkmalen, beispielsweise den Farbmerkmalen rot, blau, grün oder Formmerkmalen, wie den Maßmerkmalen Höhe, Breite, Tiefe. Aus den einzelnen Objektmerkmalen kann ein Gruppenmerkmal, eine Farbe oder ein Volumen ermittelt werden, das dann als solches mit dem entsprechenden Klassenmerkmal verglichen wird. Ein solcher Gruppenmerkmalsvergleich kann zusätzlich zu einem Einzelmerkmalvergleich durchgeführt werden.

Zweckmäßigerweise wird den Klassenmerkmalen jeweils eine Varianz zugeordnet, die beim Merkmalsvergleich berücksichtigt wird. Die Varianz kann eine Schwankung beinhalten, die das Merkmal bei verschiedenen identischen Produkten dieser Klasse üblicherweise aufweist. Möglich sind beispielsweise Formvarianzen, um Kartondellen und Folienänderungen nicht fehlerhaft als Klassen trennende Merkmale zu berücksichtigen. Auch Farbvarianzen, um beispielsweise ein Ausbleichen als Fehlerquelle auszuschließen, sind vorteilhaft, ebenso wie Bildstrukturvarianzen, um Verschmutzungen tolerieren zu können. Besonders vorteilhaft sind Ausrichtungsvarianzen, um zu einer aufnehmenden Kamera verschieden ausgerichtete Objekte korrekt einklassifizieren zu können.

Eine weitere vorteilhafte Ausgestaltung der Erfindung sieht vor, dass die Objektcharakteristik Objektmerkmale enthält und diese in verschiedene Ebenen eingeteilt werden. Zweckmäßigerweise enthält eine erste Ebene auf dem Objekt eine oder mehrere sichtbare Figuren, wie Zeichen, also Buchstaben und/oder Ziffern, Zeichnfolgen, Symbole, Piktogramme, Bilder, ID-Codes, wie Barcodes, und/oder dergleichen. Auch Objektmaße können der ersten Ebene zugeordnet werden. Eine zweite Ebene kann geometrische Relationen der Figuren enthalten, wie die Lage einer Figur in einem Bild des Objekts, der Abstand zweier Figuren voneinander, den Winkel einer Linie zwischen zwei Figuren mit einer Referenzlinie, z.B. der Waagerechten, und/oder den Winkel zweier oder dreier Linie zwischen drei Figuren des Objekts. Auch Farbverläufe können der zweiten Ebene zugeordnet werden.

Die Merkmale der beiden Ebenen können in unterschiedlicher Weise für den Vergleich verwendet werden. Eine Möglichkeit besteht darin, dass der Vergleich in zumindest zwei aufeinander aufbauenden Schritten erfolgt, die zweckmäßigerweise hintereinander ausgeführt werden. Im ersten Schritt wird ausschließlich ein Teil der Objektmerkmale verwendet, z.B. die Merkmale der ersten Ebene, und im zweiten Schritt werden andere Objektmerkmale verwendet, z.B. die Merkmale der zweiten Ebene, insbesondere ausschließlich diese Merkmale.

Weiter ist es vorteilhaft, im ersten Schritt die Menge der Klassencharakteristiken in einer Vorauswahl zu einer Untermenge zu reduzieren. Diese Untermenge kann im zweiten Schritt als Suchraum verwendet werden, so dass vom ersten zum zweiten Schritt eine Suchraumreduzierung erfolgt. Im zweiten Schritt kann aus der Untermenge eine Objektkandidatenliste erstellt werden. Diese umfasst vorteilhafterweise diejenigen Klassencharakteristiken, die im Vergleich einen Vergleichswert oberhalb eines Schwellwerts erzielt haben und/oder eine insbesondere vorgegebene Anzahl von Klassencharakteristiken mit den besten Vergleichswerten. Anschließend wird die Objektcharakteristik einer Klassencharakteristik aus der Kandidatenliste zugeordnet und hierdurch in die entsprechende Klasse eingeordnet bzw. klassifiziert.

Vorteilhafterweise wird das Objekt von mehreren Seiten optisch aufgenommen und beim Vergleich der Objektcharakteristik mit den Klassencharakteristiken wird eine Ausrichtungsvarianz des Objekts berücksichtigt. Auf diese Weise kann vermieden werden, dass die Ausrichtung des Objekts, beispielsweise auf einem Transportmittel, eine Klassifizierung unmöglich macht oder zu einem falschen Klassifizierungsergebnis führt. Als Ausrichtungsvarianz kann verstanden werden, dass das Klassifizierungsergebnis unabhängig von der Ausrichtung des Objekt zumindest im Wesentlichen gleich bleibt, also zumindest im Wesentlichen unabhängig von der Ausrichtung des Objekts ist.

Die Dimensionalität der Ausrichtungsvarianz ist hierbei zweckmäßigerweise vorbestimmt, wobei auch eine ein- oder zweidimensionale Varianz möglich ist. So wird üblicherweise ein Karton mit Flaschen aufrecht auf ein Transportband an Kameras vorbeigeführt. Es ist daher ausreichend, wenn die Ausrichtungsvarianz eine Drehung des Kartons auf dem Transportmittel um eine vertikale Achse berücksichtigt. Eine Drehung um eine horizontale Achse kann unberücksichtigt bleiben. Die Ausrichtungsvarianz erfasst zweckmäßigerweise eine Varianz in Form und insbesondere auch Helligkeit, da Ausrichtungsveränderungen des Objekts üblicherweise zu Formänderungen des Objekts in aufgenommenen Bildern führen. Durch veränderte Schattenwürfe kann es zu Veränderungen der Helligkeit des Objekts in den Aufnahmen kommen.

Eine weitere vorteilhafte Ausgestaltung der Erfindung sieht vor, dass beim Vergleich der Objektcharakteristik mit den Klassencharakteristiken andere als optische Information als zusätzliche Information verwendet wird. Solche Information kann zur Ermittlung des Vergleichsergebnisses zusätzlich zur optischen Information herangezogen werden und/oder zur Überprüfung des Vergleichsergebnisses verwendet werden, also als Plausibilitätsinformation zur Überprüfung des Vergleichsergebnisses.

Eine solche zusätzliche Information kann beispielsweise eine Standortinformation des Objekts sein. So kann beispielsweise die Information, welche Objekte auf einem Transportmittel sein sollten, als zusätzliche Information verwendet werden. Liegt beispielsweise eine Liste von Objekten vor, die Innerhalb eines vorbekannten Zeitfensters auf ein Transportmittel gegeben werden beziehungsweise gegeben werden sollen, kann diese Liste zur Einschränkung der zu durchsuchenden beziehungsweise zu vergleichenden Klassen verwendet werden. Möglich ist es auch, diese Liste zur Überprüfung des bereits erhaltenden Vergleichsergebnisses zu verwenden.

Eine weitere Möglichkeit besteht darin, das Gewicht des Objekts als zusätzliche Information zu verwenden. So kann das Objekt beispielsweise auf einem Transportmittel gewogen und das Gewicht kann als zusätzliche Information zum Bearbeiten des Vergleichs oder zum Überprüfen des Vergleichsergebnisses verwendet werden.

Es kann vorkommen, dass ein Produkt von einem Hersteller einem Re-Design unterzogen wird, so dass die äußere Erscheinung des an sich gleichen Produkts verändert wird. Das kann dazu führen, dass für das neu designte Produkt keine Klassencharakteristik vorhanden ist und der Vergleich fehl schlägt. Generell kann ein Vergleich fehlschlagen, wenn das Vergleichsergebnis einen Grenzwert nicht übersteigt. Es ist auch möglich, dass ein neues Produkt ausgeliefert wird, das jedoch noch nicht in der Klassendatenbank eingetragen ist. Auch hier scheitert der Vergleich. Für solche Produkte ist also keine Klassencharakteristik bzw. Klasse vorhanden. In diesem Fall ist es vorteilhaft, dass das nicht klassifizierte Produkt als ein solches Produkt erkannt wird, für das keine Klasse vorhanden. Zweckmäßigerweise wird dann zumindest ein Objektbild des Produkts einer Videocodierung zugeführt. Das Bild kann durch einen Bediener einer - ggf. neuen, also noch nicht vorhandenen - Klasse zugeordnet werden. Die Objektcharakteristik des Objekts wird nun - ggf. ohne jegliche inhaltliche Veränderung - zu einer Klassencharakteristik umgewandelt und dem Satz bzw. der Menge der bestehenden Klassencharakteristiken eingefügt.

Des Weiteren ist die Erfindung durch eine Vorrichtung zum Sortieren von Objekten nach Objektklassen gemäss dem unabhängigen Anspruch 13 definiert. Die Vorrichtung enthält insbesondere zumindest eine Kamera zur Aufnahme des Objekts und zweckmäßigerweise ein Transportmittel zum Transport des Objekts, insbesondere zu einem Aufnahmegebiet der Kamera. Weiter enthält die Vorrichtung ein Vergleichsmittel, das dazu vorbereitet ist, aus den aus der Aufnahme gewonnenen optischen Daten eine das Objekt beschreibende Objektcharakteristik zu schaffen, die Objektcharakteristik mit mehreren Klassencharakteristiken zu vergleichen, die jeweils für eine von mehreren Objektklassen charakteristisch sind, und anhand des Vergleichsergebnisses das Objekt zumindest einer Klasse zuzuordnen. Vorteilhafterweise umfasst die Vorrichtung außerdem eine Sortiereinrichtung zum Sortieren der Objekte entsprechend der Klassenzuordnung auf verschiedene Transportelemente beziehungsweise Transporteinheiten.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammenfasst werden. Insbesondere sind diese Merkmale jeweils einzeln und in beliebiger geeigneter Kombination mit dem erfindungsgemäßen Verfahren und der erfindungsgemäßen Vorrichtung gemäß den unabhängigen Ansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit dem Gegenstand der Ansprüche kombiniert werden.

Es zeigen:
- FIG 1: eine Vorrichtung zum Sortieren von Objekten,
- FIG 2: die Vorrichtung aus FIG 1 in einem Blockdiagramm,
- FIG 3: ein Ablaufdiagramm eines Klassifiziervorgangs mit anschließender Sortierung nach der Klassifizierung,
- FIG 4: ein Ablaufdiagramm eines weiteren Klassifiziervorgangs in zwei aufeinander folgenden Schritten,
- FIG 5: einen optionalen dritten Schritt mit Gewichtungen von Merkmalen
- FIG 6: eine Anordnung von Merkmalen in einem Merkmalsraum und
- FIG 7: einen Abstand zwischen einem Teil einer Objektcharakteristik zu den entsprechenden Teilen mehrerer Klassencharakteristiken und dessen Veränderung durch Gewichtungen.

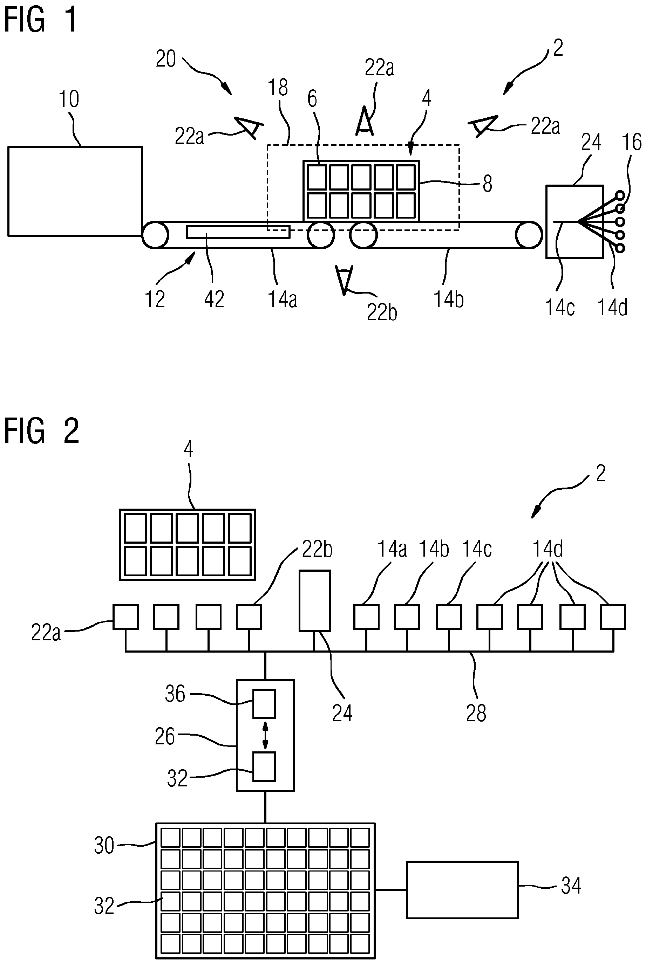

FIG 1 zeigt eine Vorrichtung 2 zum Sortieren von Objekten 4, die in diesem Ausführungsbeispiel eine Vielzahl von Waren sind und von denen der Übersichtlichkeit nur ein Objekt 4 dargestellt ist. Das Objekt 4 ist ein Gebinde aus mehreren identischen Elementen, die in diesem Ausführungsbeispiel Einzelwaren 6 sind, beispielsweise Konservendosen mit Mais, die durch eine Umverpackung 8 im Gebinde zusammengehalten werden. Eine Vielzahl von solchen Objekten 4 sind in einem Warenlager 10 gelagert und werden von dort auf ein Transportmittel 12 gegeben, beispielsweise manuell oder durch einen Feeder. Das Transportmittel 12 umfasst mehrere Transporteinheiten 14a - 14d, die das Warenlager 10 mit einer Anzahl von Entladestationen 16 verbinden. Die Transporteinheiten 14a - 14d können als Transportbänder ausgeführt sein, die das Objekt 4 vom Warenlager 10 zu einer der Entladestationen 16 transportieren. An den Entladestationen 16 stehen LKWs bereit, an die die Objekte 4 von der letzten Transporteinheit 14d herangeführt werden.

Das Warenlager 10 ist beispielsweise ein Lager einer Kette von Supermärkten, die durch die einzelnen LKWs mit Waren beliefert werden. Die Objekte 4 sind Gebinde oder Einzelwaren, die nach Objekttypen auf die Entladestationen 16 bzw. LKWs sortiert werden, also nach inhaltlich gleichen Waren bzw. Objekten 4. Inhaltlich gleich bedeutet hier, dass die Objekte 4 einen Inhalt, wie die Einzelwaren 6, und eine Umverpackung 8 aufweisen, wobei der Inhalt gleich ist und die Umverpackung 8 verschieden sein kann. Zur Sortierung werden die Objekte 4 jedoch nach Objektklassen bzw. Warenklassen unterschieden. Eine Objektklasse beinhaltet nur inhaltlich und optisch identische Objekte 4, bei denen also auch die Umverpackung 8 identisch ist. Objekte mit üblichen transportbedingten oder verpackungsbedingten optischen Unterschieden werden als identische Objekte bezeichnet und gehören einer Objektklasse an.

Im Warenlager 10 wird eine Vielzahl von Objekten 4, z.B. aus Regalen, auf einen vorderen Teil des Transportmittels 12 gelegt, der in FIG 1 durch das Transportband 14a vereinfacht dargestellt ist, jedoch eine Vielzahl von einzelnen Transportelementen, wie Transportbändern enthalten kann. Im Transportmittel 12 gibt es einen Punkt, nach dem - also im Transportfluss unterhalb des Punkts - kein Objekt 4 mehr auf das Transportmittel 12 aufgelegt wird. Im Transportfluss unterhalb dieses Punkts ist die Sortiervorrichtung 2 angeordnet, durch die die Objekte 4 nach Objektklassen klassifiziert und sortiert werden. Zur Sortierung werden die Objekte 4 hierzu optisch untersucht.

Hierfür ist eine Sortiervorrichtung 2 mit einem Aufnahmebereich 18, einem Kamerasystem 20 und einem Vergleichsmittel 26 vorhanden. Gelangt ein Objekt 4 auf seinem Transportweg in den Aufnahmebereich 18, so wird es von dem Kamerasystem 20 von mehreren Seiten aufgenommen. Das Kamerasystem 20 enthält vier Kameras 22a-b, von denen die drei Kameras 22a als zweidimensionale Kameras ausgeführt sind und die Kamera 22b als eindimensionale Kamera, beispielsweise als Zeilenkamera. Die Kamera 22b ist zwischen zwei Transporteinheiten 14a, 14b angeordnet und ihr Gesichtsfeld ist zwischen einen Schlitz zwischen den Transporteinheiten 14a, 14b von unten auf das Objekt 4 gerichtet. Die Kameras 22a sind von oben beziehungsweise von mehreren Seiten auf das Objekt 4 gerichtet. Die Kameras 22a,b nehmen jeweils ein oder mehrere Bilder vom Objekt 4 auf und werten diese aus. Hierbei können die Bilder einzeln ausgewertet werden. Es ist jedoch auch möglich, Bilddaten von mehreren Bildern zusammenzufügen und gemeinsam auszuwerten. Dies kann durch ein Stitching von Bildern erfolgen, die dann als Gesamtbild ausgewertet werden.

Nach dem Durchlaufen des Aufnahmebereichs 18 wird das Objekt 4 zu einer Sortiereinrichtung 24 transportiert, die das Objekt 4 auf eines von mehreren Transporteinheiten 14d sortiert zum Weitertransport auf die entsprechende Entladestation 16. Jeder Transporteinheit 14d und/oder Entladestation 16 ist eine Anzahl von Objekten 4 zugeordnet, die auf die Transporteinheit 14d sortiert werden sollen. Zudem ist festgelegt, welche Objektklassen auf welche Transporteinheit 14d sortiert werden sollen. Werden mehrere Objekte 4 gleicher Klasse sortiert, so werden andere Kriterien herangezogen, auf welche Transporteinheit 14d das momentan sortierte Objekt 4 sortiert wird, z.B. der Beladezustand eines LKW, oder ein Kommissionierungskriterium. Die Objekte 4 werden so lange auf eine Transporteinheit 14d sortiert, bis alle zur Transporteinheit 14d zugeordneten Objekte 4 sortiert sind.

Die Vorrichtung 2 ist in einem schematischen Blockdiagramm in FIG 2 dargestellt. Die Kameras 22 sind mit einem Vergleichsmittel 26 verbunden, das die Bilder der Kameras 22 auswertet. In Bezugszeichen mit Buchstaben, wie beispielsweise den Kameras 22a, 22b, weisen die Ziffern auf die Art und der Buchstabe auf den Ort des Gegenstands hin. Bei Gegenständen mit gleicher Bezugsziffer handelt es sich um gleiche Gegenstände oder ähnliche Gegenstände mit im Wesentlichen gleicher Funktion, wie die Transportbänder 14 oder die Kameras 22. Wird die Bezugsziffer alleine ohne einen Bezugsbuchstaben erwähnt, so sind alle entsprechenden Gegenstände generell angesprochen.

Die Kameras 22 sind mit einem Datenbus 28 verbunden, mit dem auch die Sortiereinrichtung 24 und die Transporteinheiten 14 verbunden sind. Alternativ ist auch eine Punkt zu Punkt Verbindung zwischen Kameras 22 und Vergleichsmittel 26 möglich. Ebenfalls signaltechnisch mit dem Vergleichsmittel 26 verbunden ist ein Datenspeicher 30, der eine Vielzahl von Klassencharakteristiken 32 enthält. Über ein Aktualisierungsmittel 34 wird der Datenbestand des Datenspeichers 30, also dessen Klassencharakteristiken 32, auf aktuellem Stand gehalten, wobei das Aktualisierungsmittel 34 Klassencharakteristiken 32 aus dem Datenspeicher 30 entfernt und andere in diesen einfügt.

Zum Erkennen des Gebindes auf dem Transportmittel 12 werden die Bilder der Kameras 22 vom Vergleichsmittel 26 ausgewertet. Hierzu erstellt das Vergleichsmittel 26 aus den Bilddaten eine Objektcharakteristik 36, die sie mit den einzelnen Klassencharakteristiken 32 oder Teilen daraus vergleicht, wie in FIG 2 angedeutet ist. Diejenige Klassencharakteristik 32, die bei diesem Vergleich ein vorgegebenes Vergleichskriterium am besten erfüllt, z.B. einen höchsten Vergleichswert erzielt, der für einen erfolgreichen Vergleich über einem Grenzwert liegen muss, gibt die Klasse des Objekts 4 an. Das Objekt 4 wird in diese Klasse klassifiziert, die hierdurch das Objekt 4 bzw. Warengebinde, das auf dem Transportmittel 12 durch die Kameras 22 aufgenommen wurde, bezeichnet bzw. charakterisiert. Im Vergleichsmittel 26 ist eine Zuordnung der einzelnen Objektklassen zu den Entladestationen 16 hinterlegt, sodass das Objekt 4 nun entsprechend der Objektklasse durch die Sortiereinrichtung 24 auf die entsprechende Transporteinheit 14d sortiert werden kann, sodass das Objekt 4 seine Entladestation 16 erreicht.

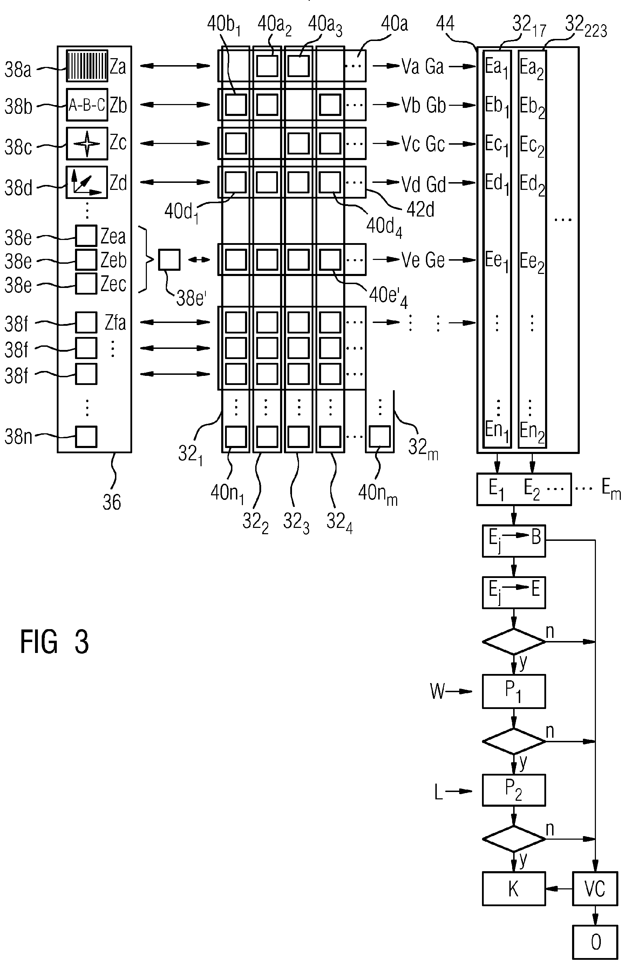

Der Vergleich der Objektcharakteristik 36 mit den Klassencharakteristiken 32 ist in einem ersten Ausführungsbeispiel im Ablaufdiagramm aus FIG 3 ausführlicher dargestellt.

Aus den Aufnahmen der Kameras 22 erzeugt das Vergleichsmittel 26 eine Anzahl von Objektmerkmalen 38, die in Summe die Objektcharakteristik sind. Unter anderem folgende Objektmerkmale 38 werden für den Vergleich der Objektcharakteristik 36 mit den Klassencharakteristiken 32 verwendet.

Die Objektmerkmale 38a-c sind Figuren, die auf der Umverpackung 8 oder einer Einzelware 6 sichtbar sind. Das Objektmerkmal 38a ist ein ID-Code-Merkmal, beispielsweise ein Barcode-Merkmal. Wird auf der Umverpackung 8 des Objekts 4 ein solcher identifizierender Code gefunden, so geht dieser in das Objektmerkmal 38a ein. Um einen solchen Code zu finden, werden die Bilder der Kameras 22 mittels bildverarbeitender Methoden auf einen solchen Code und auch auf Schrift, Zahlen und andere Zeichen ausgewertet.

Das Objektmerkmal 38b gibt Zeichen, wie Buchstaben und/oder Ziffern auf der Umverpackung 8 des Gebindes beziehungsweise Objekts 4 oder einer Einzelware 6 an. Eine solche Schrift kann eine primäre Bezeichnung sein, also eine Bezeichnung, die die Ware des Gebindes direkt angibt. Möglich ist auch eine sekundäre Bezeichnung, beispielsweise ein Gewicht der Ware innerhalb der einzelnen Einzelwaren 6, ein Gewicht des Objekts 4, eine Größe, eine Herstellerangabe oder dergleichen. Auch Verpackungsangaben, die die Verpackung an sich bezeichnen, beispielsweise ein Herstellername der Verpackung, ein Umweltzeichen oder dergleichen, werden zu den sekundären Schriftmerkmalen gerechnet.

Enthält das Objekt 4 Symbole, Piktogramme und/oder Bilder, so werden diese der Gruppe der Objektmerkmale 38c zugeordnet.

Weiter werden aus den Bildern des Objekts 4 Objektmaße ermittelt. Hierfür kann die Sortiervorrichtung 2 Maßobjekte, z.B. einen oder mehrere Maßstäbe, enthalten, die in den Bildern abgebildet sind und eine Bemaßung des Objekts 4 ermöglichen. Objektmaße werden der Gruppe der Objektmerkmale 38d zugeordnet.

Die Objektmerkmale 38e sind beispielsweise Farben oder Farbverläufe auf der Umverpackung 8 und/oder einer Einzelware 6. Das Objektmerkmal 38e besteht aus mehreren Elementen, die jeweils einen Farbkanal rot, grün, blau einer Aufnahme einer der Kameras 22 umfassen. Eine solche Aufnahme des Objekts 4 kann also in drei Aufnahmen aufgeteilt werden, die jeweils einen Farbkanal angeben. Selbstverständlich ist es auch möglich, mehr als drei Farbkanäle zu verwenden, z.B. um bestimmte Farben zuverlässig zu unterscheiden bzw. zu erkennen.

Das Objektmerkmal 38f umfasst mehrere Einzelmerkmale, die jeweils eine Entfernung zwischen Figuren, eine Drehlage von Figuren im Raum, einen Winkel einer Linie zwischen Figuren und eine Referenzlinie und/oder einen Winkel zwischen zumindest drei Figuren angeben. Der Übersichtlichkeit halber sind in FIG 3 nur drei solche Objektmerkmale 38f dargestellt, wobei in Realität weit mehr vorhanden sein können.

Auch Formmerkmale des Objekts 4 aus Sicht einer der Kameras 22 können ein Merkmal 38f sein. Die Form des Objekts 4 aus Sicht von einander entgegen gesetzten Kameras 22, beispielsweise der von oben auf das Objekt schauenden Kamera 22a und der von unten auf das Objekt 4 schauenden Kamera 22b kann gleich sein, wenn beispielsweise nur ein Umriss des Objekts 4 erfasst wird. Es ist jedoch auch möglich, dass die Formmerkmale andere Konturen, Höhengeometrien und dergleichen beinhalten, wenn die Bildverarbeitung in der Lage ist, diese Elemente zu erfassen.

Die Summe der Objektmerkmale 38 kann als Elemente eines Vektors der Objektcharakteristik 36 gesehen werden. Die einzelnen Objektmerkmale 38 sind die Vektorelemente des Vektors. Mehrere zusammenhängende Elemente, wie die Elemente 38e können als Untervektoren gesehen werden, die für sich selbst wieder einen Vektor bilden, der entweder alleine oder als Teil des Gesamtvektors aller Objektmerkmale 38 gesehen werden kann. Solche Untervektoren oder Gruppen von Merkmalen können entweder einzeln verglichen werden, wie die Objektmerkmale 38f, oder als Gruppe verglichen werden, wie die Objektmerkmale 38f.

Die einzelnen Elemente des Objektmerkmals 38e können jeweils für sich mit entsprechenden Klassenmerkmalen 40e verglichen werden. Es ist jedoch auch möglich, aus den einzelnen Elementen der Objektmerkmale 38e ein neues Objektmerkmal 38e' zu bilden, das die Form des Objekts 4 insgesamt angibt. Dieses Gesamtformmerkmal kann nun mit den Klassenmerkmalen 40e' des Merkmalstyps der Gesamtformen verglichen werden.

Der Vergleich der einzelnen Objektmerkmale 38 mit den entsprechenden Klassenmerkmalen 40 erfolgt nun merkmalstypsweise. Es wird also das Objektmerkmal 38 eines Typs, beispielsweise ein Schriftmerkmal 38b, mit den Klassenmerkmalen 40b des gleichen Typs verglichen. Oder es wird das Barcodemerkmal 38a des Objekts 4 - soweit vorhanden - mit den entsprechenden Barcodemerkmalen 40a der einzelnen Klassencharakteristiken 32_{1...m} verglichen.

Eine jede Klassencharakteristik 32_{1...m} der vorhandenen Klassen j = 1 ... m enthält ein, kein oder mehrere Klassenmerkmale 40 für jeden Merkmalstyp i = a ... n. Beispielsweise hat die Klassencharakteristik 32₁ kein Barcodemerkmal 40a₁, dafür aber mehrere Schriftmerkmale 40b₁ beispielweise mehrere Buchstaben, Ziffern und/oder Zeichenfolgen, wie Namen oder Worte.

Jedes Objektmerkmal 38 eines Typs i wird mit den Klassenmerkmalen 40i₁ ... 40iₘ des gleichen Typs i einer jeden Klasse verglichen. Die Klassenmerkmale 40iⱼ bilden also einen Suchraum 42i des Merkmals i.

Zur Durchführung des Verfahrens wird also zunächst das Objekt 4 von einer oder mehreren der Kameras 22 aufgenommen. Aus dem oder den Bildern werden die Objektmerkmale 38 extrahiert, also als solche erkannt und einer Merkmalsklasse bzw. einem Merkmalstyp zugewiesen. Danach wird ein Vergleich von Objektmerkmalen 38 mit Klassenmerkmalen 40 ausgeführt. So wird beispielsweise das Objektmerkmal 38a - falls vorhanden - mit jedem der vorhandenen Klassenmerkmale 40a₁ ... 40aₘ verglichen.

In dem Ausführungsbeispiel der FIG 3 werden auf diese Weise alle auf dem Objekt 4 vorhandenen Objektmerkmale 38 mit den vorhandenen Klassenmerkmale 40 jeweils des gleichen Typs verglichen. Es wird zu jedem Vergleich ein Vergleichswert erstellt, der die Güte des Vergleichs angibt. Die Klassenmerkmale 40aᵢ, die einen Vergleichswert über einem Schwellwert erzielen, werden dem Objektmerkmal 38a zugeordnet in Ergebnisswerten Ea.

Jedes Klassenmerkmal 40 ist Teil einer Klassencharakteristik 32. Insofern liefert jedes Klassenmerkmal 40aᵢ, das einen Vergleichswert über einem Schwellwert erzielen, eine entsprechende Klassencharakteristik 32 in eine Ergebnisliste 44. In FIG 3 sind beispielhaft die Klassencharakteristik 32₁₇ und 32₂₂₃ dargestellt.

Mit den anderen Objektmerkmalen 38i wird ebenso verfahren, so dass die Ergebnisliste 44 eine Vielzahl von Klassencharakteristik 32 umfasst. Zu jedem ihrer Klassenmerkmale 40 ist ein Ergebniswert Ea, Eb, ... vorhanden. Jeder Ergebniswert Ea, Eb, ... wird jeweils nach einem vorgegebenen mathematischen Algorithmus mit zwei Parametern verknüpft, nämlich einer Varianz V und einer Gewichtung G. Der Faktor Va gibt den Parameter der Varianz des Klassenmerkmals 40a an. Je größer die Varianz, desto kleiner der Faktor Va. Die Varianz V kann für alle Klassenmerkmale eines Typs in allen Klassen gleich sein. Meist wird die Varianz eines Merkmalstyps jedoch von Klasse zu Klasse verschieden sein, z.B. weil die Form einer Folienverpackung variabler ist als die eines Kartons.

Der Faktor Ga gibt den Parameter der Gewichtung des Klassenmerkmals 40a an. So ist beispielsweise die Gewichtung des ID-Codes-Merkmals 38a größer als die Gewichtung Gb des Schriftmerkmals 38b und diese ist wiederum größer als die Gewichtung Gc des Formmerkmals 38c und die der einzelnen Farbmerkmale 40d, da beispielsweise durch ein Ausbleichen die Farbe auf der Umverpackung 8 erheblich verändert werden kann. Auch der Gewichtungsfaktor G kann für alle Klassenparameter eines Typs gleich sein oder von Klasse zu Klasse innerhalb eines Typs variieren.

Außerdem wird jedem Objektmerkmal 38 ein Zuverlässigkeitsparameter Z zugeordnet. Dieser wurde zuvor empirisch ermittelt und jeweils den einzelnen Objektmerkmalen 38 zugewiesen. Ist beispielsweise eine Güte einer Aufnahme gering, zum Beispiel weil das Objekt 4 nicht ganz in der Aufnahme enthalten ist, eine Linse verschmutzt ist oder dergleichen, so kann dies im Zuverlässigkeitsparameter Z berücksichtigt werden. Dieser Zuverlässigkeitsparameter Z kann einer Aufnahme insgesamt also alle Objektmerkmale 38 betreffen oder den einzelnen Elementen der Objektmerkmale zugeordnet werden, sodass also ein Zuverlässigkeitsparameter Za dem Objektmerkmal 38a, der Zuverlässigkeitsparameter Zb dem Objektmerkmal 38b, usw. zugeordnet wird. Auch diese Zuverlässigkeit wird in die einzelnen Ergebnisse Ea, Eb, ... eingerechnet, beispielsweise analog wie die Gewichtung G.

Aus den Ergebniswerten Ea, Eb, ... wird zu jeder Klassencharakteristik 32 der Ergebnisliste 44 ein Gesamtergebnis Eⱼ errechnet, beispielsweise durch Summation der Einzelergebnisse Ea, Eb, ... oder durch ein anderes im Vergleichsmittel 26 hinterlegtes Verfahren. Das Gesamtergebnis Eⱼ ist ein Ergebniswert, der die Güte des Ergebnisses anzeigt. Liegt dieser Ergebniswert Eⱼ unter einem Grenzwert, so ist die Güte des Ergebnisses inakzeptabel und eine Fehlerrate bei der Klassifizierung ist als zu hoch anzusehen. Insofern wird jeder der Ergebniswerte Eⱼ in einem Prüfschritt mit dem Grenzwert B verglichen und verworfen (n) wenn der Grenzwert nicht erreicht wird. Die übrigen Ergebniswerte Eⱼ bilden eine Kandidatenliste, aus denen ein Ergebniswerte E mit einem vorgegebenen Algorithmus vom Vergleichsmittel 26 ausgesucht und als Vergleichsergebnis gewählt wird.

Erreicht keiner der Ergebniswerte Eⱼ den Grenzwert B, so schlägt die automatisierte Klassifizierung in diesem Falle fehl (n). Ein Bild oder mehrere Bilder des Objekts 4 werden einer Videocodierung VC zugeführt. Bei dieser Videocodierung werden die Bilder auf einem Bildschirm angezeigt und ein Bearbeiter identifiziert das Objekt 4 und führt auf diese Weise eine Klassifizierung K durch, indem er dem Objekt 4 eine Ware beziehungsweise dessen Objektklasse zuweist. Während dieses Prozesses wird das Objekt in eine Transportschleife geführt und dort z.B. 30 Sekunden transportiert, bevor es wieder auf das Transportband 14b geführt wird zur Sortierung.

Außerdem entscheidet der Bearbeiter, ob die Klassifizierung durch einen Fehler fehlgeschlagen ist, z.B. weil das Objekt 4 durch Verschmutzung oder Beschädigung nicht klassifiziert werden konnte, oder ob es sich um eine neue Objektklasse oder Objekttyp handelt. In diesem Fall sortiert das Vergleichsmittel 26 die Objektcharakteristik 36 als neue Klassencharakteristik 32 in die Menge der Klassencharakteristiken 32 ein, so dass diese Menge eine neue Klassencharakteristik 32 aufweist. Weitere Objekte 4 dieser Klasse werden nun automatisch klassifiziert.

Üblicherweise wird das Gesamtergebnis E jedoch den Grenzwert überschreiten (y). Nun werden zur Überprüfung des Ergebnisses E zwei Plausibilitätsprüfungen P₁ und P₂ durchgeführt. Es wird hierfür weitere Information verwendet, zweckmäßigerweise andere Information als optische Information. Beispielsweise wird das Gewicht W des Objekts 4 gemessen. Dies geschieht durch eine Waage 46 (FIG 1), die in der Transporteinheit 14a vorhanden ist. Das Vergleichsmittel 26 oder der Datenspeicher 30 enthält zu jeder Klasse ein Gewicht. Da das Ergebnis E dem Objekt 4 eine Objektklasse zuordnet, ist das Gewicht des Produkts bzw. der Klasse bekannt. Dieses Klassengewicht kann mit dem gemessenen Gewicht W des Objekts 4 verglichen werden. Liegt das theoretische Gewicht des Objekts 4 innerhalb eines Toleranzbands W ± x% um das gemessene Gewicht W, so ist der Plausibilitätstest P₁ erfolgreich (y). Ist ansonsten der Plausibilitätstest P₁ nicht erfolgreich (n), so wird ein Bild des Objekts 4 oder mehrere Bilder der Videocodierung VC zugeführt.

Die zweite Plausibilitätskontrolle P₂ verwendet eine Objektliste L die solche Objekte 4 beinhaltet, die innerhalb eines Zeitfensters vor der Aufnahme der Bilder des Objekts 4 auf das Transportmittel 12 gegeben wurden oder gegeben werden sollten. Diese Objektliste L beinhaltet eine Produktliste und daher eine Klassenliste, da ein Produkt und eine zugeordnete Klasse als gleichwertig gesehen werden können. Durch das Gesamtergebnis E wird das Objekt 4 einer einzelnen Objektklasse zugeordnet und damit als ein bestimmtes Produkt identifiziert. Ist dieses Objekt 4 beziehungsweise Produkt auf der Objektliste L vorhanden (y), so ist die Plausibilitätsprüfung P₂ erfolgreich. Stimmt das Produkt mit der Objektliste L nicht überein, ist es also auf dieser Liste L nicht vorhanden, so schlägt der Plausibilitätstest P₂ fehl (n). Um dennoch zu einer Klassifizierung zu kommen, kann beispielsweise die Videocodierung VC durchgeführt werden.

Sind beide Plausibilitätsprüfungen P₁, P₂ erfolgreich, so wird die letztendliche Klassifizierung K durchgeführt und das Objekt 4 wird also endgültig einer Objektklasses zugeordnet. Die Klasse wird nun für die anschließende Sortierung S in der Sortiereinrichtung 24 verwendet, die das Objekt 4 entsprechend der Klassifizierung auf eines der Transporteinheiten 14d und damit zum Transport zu einer Entladestation 16 leitet.

Es kann vorkommen, dass auch die Videocodierung VC nicht zu einem befriedigenden Ergebnis führt. Dies kann dadurch bedingt sein, dass beispielsweise ein Produkt beziehungsweise Objekt 4 so stark beschädigt ist, dass es automatisiert nicht erkannt werden konnte und der Bearbeiter der Videocodierung zum Schluss kommt, dass dieses Objekt 4 nicht weiter transportiert werden sollte. Durch einen entsprechenden vom Bearbeiter eingegebenen Befehl wird dieses Objekt 4 im Verfahrensschritt O aussortiert. Es besteht auch die Möglichkeit, dass das Objekt 4 insoweit falsch ist, dass es zu gar keiner Entladestation 16 transportiert werden soll. Wurde beispielsweise ein Objekt 4 verwechselt und ein falsches Produkt auf das Transportmittel 12 gestellt, so wird dies im zweiten Plausibilitätstest P₂ erkannt und von der Videocodierung VC bestätigt. Das Objekt 4 wird im Verfahrensschritt O aussortiert.

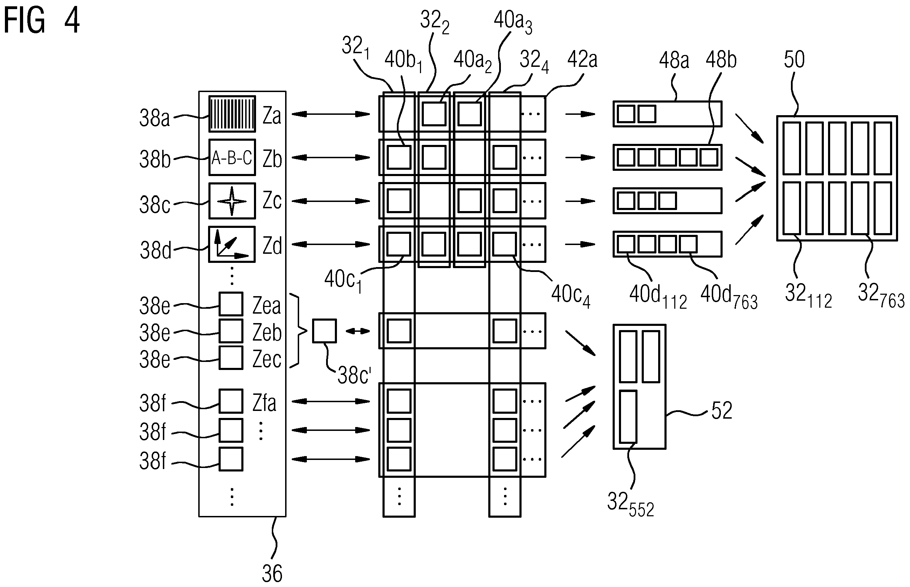

FIG 4 zeigt ein weiteres Klassifizierungsverfahren mit einigen Abänderungen im Vergleich zum Verfahren aus FIG 3. Die nachfolgende Beschreibung beschränkt sich im Wesentlichen auf die Unterschiede zum Ausführungsbeispiel aus F 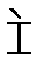 G 3, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind in den folgenden Ausführungsbeispielen übernommen, ohne dass sie erneut beschrieben sind.

Der Vergleich wird in zwei Stufen ausgeführt. Hierfür sind die Objektmerkmale 38 in zwei Ebenen aufgeteilt: Die auf dem Objekt 4 sichtbaren Figuren, also die Objektmerkmale 38a-c, und die Objektmaße 38d bilden Merkmale der ersten Ebene. Die Farbmerkmale 38e und die geometrischen Beziehungen 38f der Figuren bilden Merkmale der zweiten Ebene.

In der ersten Stufe werden die Objektmerkmale 38a-d der ersten Ebene dazu verwendet, die Menge der Klassencharakteristiken 32 in einer Vorauswahl zu einer Untermenge zu reduzieren. Dazu werden die Objektmerkmale 38a-d mit den entsprechenden Klassenmerkmalen 40a-d verglichen, wie zu FIG 3 beschrieben. Jeder Vergleich führt zu einer Anzahl von passenden Klassenmerkmalen 40, die in entsprechenden Kandidatenlisten 48 zusammengefasst sind. Beispielhaft sind die Klassenmerkmalen 40d₁₁₂ und 40d₇₆₃ dargestellt. Da es möglich ist, dass manche Objektmerkmale 38a-d nur selten vorkommen, wie z.B. das Barcodemerkmal 38a, umfassen die Kandidatenlisten 48 verschieden viele Klassenmerkmalen 40. Da jedes Klassenmerkmal 40 zu einer Klassencharakteristik 32 gehört, ist mit der Summe der Klassenmerkmal 40 eine - in der Regel kleinere - Summe von Klassencharakteristiken 32 verbunden. Alle so aus den Kandidatenlisten 48 abgeleiteten Klassencharakteristiken 32 der bilden die Untermenge 50 der Klassencharakteristiken 32. In FIG 4 sind beispielhaft die Klassencharakteristiken 32₁₁₂ und 32₇₆₃ dargestellt, die aus dem Vergleich des Merkmals 38d abgeleitet wurden. Diese Untermenge 50 bildet den Suchraum für den zweiten Schritt des Vergleichs.

Im zweiten Schritt werden die Merkmale 38e-f dazu verwendet, die Zahl der Klassencharakteristiken 32 der Untermenge 50 auf eine Zahl von beispielsweise maximal zehn zu beschränken, die eine Objektkandidatenliste 52 bilden. In FIG 4 umfasst die Objektkandidatenliste 52 drei Klassencharakteristiken 32. Hierfür werden z.B. die Anordnungen der Figuren des Objekts 4 bzw. dessen Objektcharakteristik 36, die in den Klassencharakteristiken 32 der Untermenge 50 gefunden wurden, mit den entsprechenden Klassenmerkmalen 40f verglichen. Da die Klassencharakteristiken 32₂ und 32₃ nicht der Untermenge 50 angehören, werden sie im zweiten Schritt nicht berücksichtigt, wie in FIG 4 angedeutet ist.

Wie FIG 4 zeigt, umfasst die Objektkandidatenliste 52 drei Klassencharakteristiken 32, die auf das Objekt 4 passen könnten. Der Vergleich führte daher in den beiden Schritten zu keinem eindeutigen Ergebnis. Das kann daran liegen, dass ein Hersteller eine Vielzahl von sehr ähnlichen Waren bzw. Gebinden geliefert hat, die schwer zu unterscheiden sind.

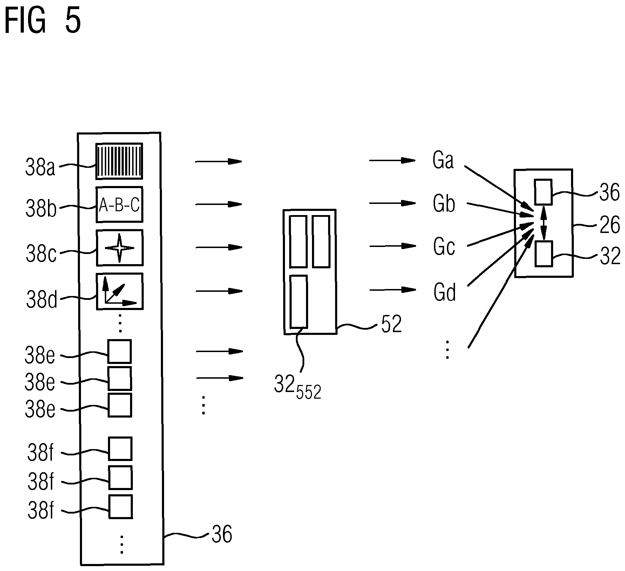

Um dennoch zu einem eindeutigen Ergebnis zu kommen, werden die Objektmerkmale 38 in einem dritten Schritt des Vergleichs mit einem Wichtungsfaktor Gi gewichtet. Dies ist in FIG 5 dargestellt. Hierfür wird ermittelt, wie oft die einzelnen Objektmerkmale 38 in der Objektkandidatenliste 52 gefunden werden. Je öfter sie gefunden werden, desto geringer werden sie gewichtet, so dass sie reziprok zur Häufigkeit ihres Vorkommens in den Klassencharakteristiken 32 gewichtet werden. Die Reziprozität muss hierbei nicht linear sein.

Im dritten Schritt wird also die Objektcharakteristik 36 mit den Klassencharakteristiken 32 der Objektkandidatenliste 52 verglichen, wie in FIG 5 dargestellt ist, wobei die Wichtungsfaktoren Gi in den Vergleich einfließen, indem sie beispielsweise mit dem jeweiligen Ergebnis der einzelnen Merkmalsvergleiche multipliziert werden. Anschließend wird das beste Ergebnis als Vergleichsergebnis ermittelt. Dieses kann den Plausibilitätsprüfungen P unterworfen werden, wie zu FIG 3 beschrieben ist. Es ist auch möglich, dass der Vergleich fehl schlägt und die Videocodierung durchgeführt wird, wie zu FIG 3 beschrieben ist.

Nach der erfolgreichen Klassifizierung wird das Objekt 4 der Sortiereinrichung 24 zugeführt und entsprechend der Klassifizierung auf die richtige Entladestation 16 sortiert.

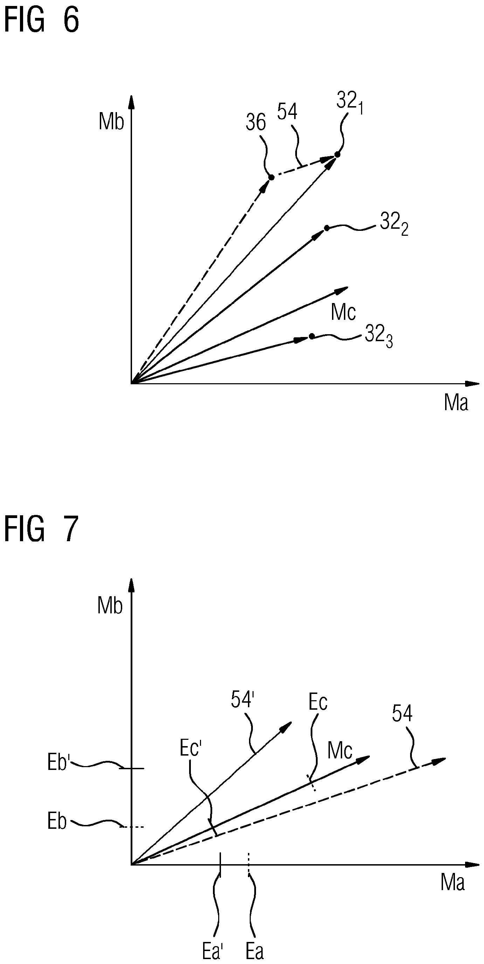

FIG 6 zeigt beispielhaft drei Klassencharakteristiken 32₁₋₃, die Punkte in einem Merkmalsraum bilden, der im gezeigten Ausführungsbeispiel durch die Merkmale Ma, Mb und Mc aufgespannt wird. Üblicherweise wird es sich bei dem Merkmalsraum um einen vieldimensionalen Raum handeln, dessen Dimensionszahl der Zahl der verwendeten Merkmale M gleicht, die in der Menge aller Klassencharakteristiken 32 vorhanden ist.

Auch die Objektcharakteristik 36 bildet einen Punkt im Merkmalsraum, der jeweils einen Abstand 54 zu den Klassencharakteristiken 32₁₋₃ aufweist. In erster Näherung bildet der Abstand zwar ein Kriterium für die Ähnlichkeit der Objektcharakteristik 36 mit den Klassencharakteristiken 32₁₋₃, doch wie zu FIG 3 und FIG 4 beschrieben ist, spielen Gewichtungen eine große Rolle im Vergleich der Objektcharakteristik 36 mit den Klassencharakteristiken 32₁₋₃.

FIG 7 zeigt den Einfluss der Gewichtungen Gi auf den Abstand 54. Der Abstand 54 aus FIG 6 ist in FIG 7 vergrößert dargestellt. Die Gewichtungen Gi führen dazu, dass die z.B. den Abstand bildenden Ergebnisse Ei zu den gewichteten Ergebnissen Ei' verändert werden. Diese führen zu einem veränderten "Abstand" 54', der als Maß für ein Vergleichsergebnis verwendet werden kann. Diese Veränderung durch Gewichtung kann in jedem der drei Schritte des Vergleichs durchgeführt werden.

## Patentansprüche

1. Verfahren zum Sortieren von Objekten (4), bei dem die Objekte (4) durch ein Verfahren zum Zuordnen von Objekten (4) zu Objektklassen klassifiziert werden;
wobei bei dem Verfahren zum Zuordnen von Objekten (4) zu Objektklassen ein Objekt (4) optisch aufgenommen wird, aus den daraus gewonnenen optischen Daten eine das Objekt (4) beschreibende Objektcharakteristik (36) geschaffen und die Objektcharakteristik (36) mit mehreren Klassencharakteristiken (32) verglichen wird, die jeweils für eine von mehreren Objektklassen charakteristisch sind, und das Objekt (4) in Abhängigkeit vom Vergleichsergebnis (E) einer Objektklasse zugeordnet wird, wobei die Objekte (4) Gebinde aus mehreren im Gebinde zusammenhängend verpackten, gleichen Einzelwaren (6) sind und die Objektklassen Gebindetypen sind;
und die Objekte anschließend unter Verwendung der Klassifizierung (K) auf verschiedene Transporteinheiten sortiert werden.

2. Verfahren nach Anspruch 1,
**dadurch gekennzeichnet, dass**
die Objektklassen eine spezifische Ware beschreiben.

3. Verfahren nach einem der vorhergehenden Ansprüche,
**dadurch gekennzeichnet, dass**
aus einem einzigen neuen Objekt (4) eine Klassencharakteristik (32) gebildet und in einen bestehenden Satz von Klassencharakteristiken (32) eingefügt wird, die bestehenden Klassencharakteristiken (32) unverändert bleiben und mit der neuen Klassencharakteristik (32) einen neuen Satz bilden und der Vergleich mit dem neuen Satz ausgeführt wird.

4. Verfahren nach einem der vorhergehenden Ansprüche,
**dadurch gekennzeichnet, dass**
die Objektcharakteristik (36) und die Klassencharakteristiken (32) jeweils einen Punkt in einem mehrdimensionalen Merkmalsraum bilden und der Vergleich einen Abstand (54) des Punkts der Objektcharakteristik (36) zu den Punkten der Klassencharakteristiken (32) berücksichtigt.

5. Verfahren nach einem der vorhergehenden Ansprüche,
**dadurch gekennzeichnet, dass**
die Objektcharakteristik (36) mehrere Objektmerkmale (38) enthält und die Klassencharakteristiken (32) jeweils mehrere Klassenmerkmale (40) enthalten, und die Objektmerkmale (38) mit den zugehörigen Klassenmerkmalen (40) verglichen werden.

6. Verfahren nach Anspruch 5,
**dadurch gekennzeichnet, dass**
für den Vergleich jedes der Objektmerkmale (38) jeweils einem Merkmalstyp zugewiesen wird, der mehrere Elemente (40) umfasst, die in ihrer Gesamtheit einen Merkmalssuchraum (42) bilden, und jedes Objektmerkmal (38) im Merkmalssuchraum (42) seines Merkmalstyps gesucht wird.

7. Verfahren nach Anspruch 5 oder 6,
**dadurch gekennzeichnet, dass**
die Objektmerkmale (38) reziprok zur Häufigkeit ihres Vorkommens in den Klassencharakteristiken (32) gewichtet werden.

8. Verfahren nach einem der Ansprüche 5 bis 7,
**dadurch gekennzeichnet, dass**
zumindest einige der Objektmerkmale (38c) in Gruppen zusammengefasst sind, jeweils Gruppenweise mit entsprechenden Klassenmerkmalen (40c) verglichen werden und mehrere Gruppenvergleichsergebnisse (Ec) gewonnen werden und die Gruppenvergleichsergebnisse in einem Gesamtergebnis (E) zusammengefasst werden.

9. Verfahren nach einem der vorhergehenden Ansprüche,
**dadurch gekennzeichnet, dass**
die Objektcharakteristik (36) Objektmerkmale (38) enthält und für den Vergleich ein Teil der Objektmerkmalen (38) dazu verwendet wird, die Menge der Klassencharakteristiken (32) in einer Vorauswahl zu einer Untermenge (50) zu reduzieren, und ein anderer Teil der Objektmerkmale (38) dazu verwendet wird, aus der Untermenge (50) eine Objektkandidatenliste (52) zu erzeugen.

10. Verfahren nach einem der vorhergehenden Ansprüche,
**dadurch gekennzeichnet, dass**
das Objekt (4) von mehreren Seiten optisch aufgenommen wird und beim Vergleich der Objektcharakteristik (36) mit den Klassencharakteristiken (32) eine Ausrichtungsvarianz des Objekts (4) berücksichtigt wird.

11. Verfahren nach einem der vorhergehenden Ansprüche,
**dadurch gekennzeichnet, dass**
beim Vergleich der Objektcharakteristik (36) mit den Klassencharakteristiken (32) andere als optische Information als Plausibilitätsinformation verwendet wird zur Überprüfung des Vergleichsergebnisses.

12. Verfahren nach einem der vorhergehenden Ansprüche,
**dadurch gekennzeichnet, dass**
das Gewicht (W) des Objekts (4) als Objektmerkmal beim Vergleich berücksichtigt wird.

13. Vorrichtung zum Sortieren von Objekten (4) nach Objektklassen mit zumindest einer Kamera (22) zur Aufnahme des Objekts (4), einem Vergleichsmittel (26), das dazu vorbereitet ist, aus den aus der Aufnahme gewonnenen optischen Daten eine das Objekt (4) beschreibende Objektcharakteristik (36) zu schaffen, die Objektcharakteristik (36) mit mehreren Klassencharakteristiken (32) zu vergleichen, die jeweils für eine von mehreren Objektklassen charakteristisch sind, und anhand des Vergleichsergebnisses das Objekt (4) zumindest einer Klasse zuzuordnen, und mit einer Sortiereinrichtung (24) zum Sortieren der Objekte (4) entsprechend der Klassenzuordnung auf verschiedene Transporteinheiten (14d), wobei die Objekte (4) Warengebinde aus mehreren im Gebinde zusammenhängend verpackten, gleichen Einzelwaren (6) sind und die Objektklassen Gebindetypen sind.

## Claims

1. Method for sorting objects (4) in which the objects (4) are classified by a method for associating objects (4) with object classes;
wherein, in the method for associating objects (4) with object classes, an optical image of an object (4) is captured, an object characteristic (36) describing the object (4) is created from the optical data obtained therefrom and the object characteristic (36) is compared with a number of class characteristics (32), which are characteristic in each case for one of a number of object classes, and the object (4) is associated with an object class as a function of the comparison result (E), wherein the objects (4) are containers of a number of identical individual goods items (6) packed contiguously in the container and the object classes are container types;
and the objects are subsequently sorted to various transport units using the classification (K).

2. Method according to claim 1,
**characterised in that**
the object classes describe a specific goods item.

3. Method according to one of the preceding claims,
**characterised in that**
a class characteristic (32) is formed from a single new object (4) and is inserted into an existing set of class characteristics (32), the existing class characteristics (32) remain unchanged and, with the new class characteristic (32), form a new set, and the comparison is made with the new set.

4. Method according to one of the preceding claims,
**characterised in that**
the object characteristic (36) and the class characteristics (32) each form a point in a multidimensional feature space and the comparison takes into account a distance (54) between the point of the object characteristic (36) and the points of the class characteristics (32).

5. Method according to one of the preceding claims,
**characterised in that**
the object characteristic (36) contains a number of object features (38) and the class characteristics (32) each contain a number of class features (40) and the object features (38) are compared with the associated class features (40).

6. Method according to claim 5,
**characterised in that**
each of the object features (38) is allocated a feature type that comprises a number of elements (40) in each case for the comparison, which in their entirety form a feature search space (42), and each object feature (38) is looked for in the feature search space (42) of its feature type.

7. Method according to claim 5 or 6,
**characterised in that**
the object features (38) are weighted reciprocally to the frequency of their occurrence in the class characteristics (32) .

8. Method according to one of claims 5 to 7,
**characterised in that**
at least a few of the object features (38c) are combined into groups, compared in groups with corresponding class features (40c) in each case and a number of group comparison results (Ec) are obtained and the group comparison results are combined into an overall result (E).

9. Method according to one of the preceding claims,
**characterised in that**
the object characteristic (36) contains object features (38) and for the comparison a part of the object features (38) is used to reduce the set of the class characteristics (32) to a subset (50) in a pre-selection and another part of the object features (38) is used to create an object candidate class (52) from the subset (50).

10. Method according to one of the preceding claims,
**characterised in that**
the object (4) is captured optically from a number of sides and during the comparison of the object characteristic (36) with the class characteristics (32) an alignment variance of the object (4) is taken into consideration.

11. Method according to one of the preceding claims,
**characterised in that**
during the comparison of the object characteristic (36) with the class characteristics (32) information other than optical information is used as plausibility information for checking the comparison result.

12. Method according to one of the preceding claims,
**characterised in that**
the weight (W) of the object (4) is taken into account as the object feature during the comparison.

13. Device for sorting objects (4) into object classes with at least one camera (22) for capturing an image of the object (4), a comparison means (26) which is prepared for creating an object characteristic (36) describing the object (4) from the optical data obtained from the captured image, for comparing the object characteristic (36) with a number of class characteristics (32) that are each characteristic for one or more object classes, and to associate the object (4) with at least one class on the basis of the comparison result, and with a sorting device (24) for sorting the objects (4) in accordance with the class assignment to various transport units (14d), wherein the objects (4) are goods containers of a number of identical individual goods items (6) packed contiguously in the container and the object classes are container types.

## Revendications

1. Procédé de tri d'objets (4), dans lequel les objets (4) sont classés par un procédé d'affectation d'objets (4) à des classes d'objets ;
lors du procédé d'affectation d'objets (4) à des classes d'objets, un objet (4) étant enregistré optiquement, une caractéristique d'objet (36) décrivant l'objet (4) étant créée à partir des données optiques obtenues à partir de celui-ci et la caractéristique d'objet (36) étant comparée à plusieurs caractéristiques de classe (32), dont chacune est caractéristique d'une parmi plusieurs classes d'objets, et l'objet (4) étant affecté à une classe d'objets en fonction du résultat de la comparaison (E), les objets (4) étant des emballages constitués de plusieurs produits individuels identiques (6) emballés ensemble dans l'emballage et les classes d'objets étant des types d'emballage ;
et les objets étant ensuite triés sur différentes unités de transport en utilisant la classification (K).

2. Procédé selon la revendication 1,
**caractérisé en ce que**
les classes d'objets décrivent une marchandise spécifique.

3. Procédé selon l'une des revendications précédentes,
**caractérisé en ce que**
une caractéristique de classe (32) est formée à partir d'un nouvel objet unique (4) et insérée dans un ensemble existant de caractéristiques de classe (32), les caractéristiques de classe existantes (32) restant inchangées et formant un nouvel ensemble avec la nouvelle caractéristique de classe (32) et la comparaison étant effectuée avec le nouvel ensemble.

4. Procédé selon l'une des revendications précédentes,
**caractérisé en ce que**
la caractéristique d'objet (36) et les caractéristiques de classe (32) forment chacune un point dans un espace de caractéristiques multidimensionnel et la comparaison prend en compte une distance (54) entre le point de la caractéristique d'objet (36) et les points des caractéristiques de classe (32).

5. Procédé selon l'une des revendications précédentes,
**caractérisé en ce que**
la caractéristique d'objet (36) contient plusieurs attributs d'objet (38) et les caractéristiques de classe (32) contiennent chacune plusieurs attributs de classe (40), et les attributs d'objet (38) sont comparés aux attributs de classe associés (40).

6. Procédé selon la revendication 5,
**caractérisé en ce que**,
pour la comparaison, chacun des attributs d'objet (38) est affecté à un type d'attribut respectif qui comprend plusieurs éléments (40) qui forment dans leur intégralité une zone de recherche d'attributs (42), et chaque attribut d'objet (38) est recherché dans la zone de recherche d'attribut (42) de son type d'attribut.

7. Dispositif selon la revendication 5 ou 6, **caractérisé en ce que**
les attributs d'objet (38) sont pondérés réciproquement à la fréquence de leur apparition dans les caractéristiques de classe (32) .

8. Procédé selon l'une des revendications 5 à 7, **caractérisé en ce qu'**au
moins certains des attributs d'objet (38c) sont réunis dans des groupes, sont comparés par groupe avec des attributs de classe correspondants (40c) et plusieurs résultats de comparaison de groupes (Ec) sont obtenus et les résultats de comparaison de groupe sont regroupés dans un résultat global (E).

9. Procédé selon l'une des revendications précédentes,
**caractérisé en ce que**
la caractéristique d'objet (36) contient des attributs d'objet (38) et une partie des attributs d'objet (38) est utilisée pour la comparaison afin de réduire la quantité de caractéristiques de classe (32) dans une présélection pour former un sous-ensemble (50), et une autre partie des attributs d'objet (38) est utilisée pour générer une liste de candidats d'objet (52) à partir du sous-ensemble (50).

10. Procédé selon l'une des revendications précédentes,
**caractérisé en ce que**
l'objet (4) est enregistré optiquement de plusieurs côtés et une variation d'alignement de l'objet (4) est prise en compte lors de la comparaison de la caractéristique d'objet (36) avec les caractéristiques de classe (32).

11. Procédé selon l'une des revendications précédentes,
**caractérisé en ce que**
lors de la comparaison de la caractéristique d'objet (36) avec les caractéristiques de classe (32), des informations autres que des informations optiques sont utilisées comme informations de vraisemblance pour vérifier le résultat de la comparaison.

12. Procédé selon l'une des revendications précédentes,
**caractérisé en ce que**
la pondération (W) de l'objet (4) est prise en compte en tant qu'attribut de l'objet lors de la comparaison.

13. Dispositif de tri d'objets (4) selon des classes d'objets comportant au moins une caméra (22) pour enregistrer l'objet (4), un moyen de comparaison (26) qui est préparé pour utiliser les données optiques obtenues à partir de l'enregistrement pour créer une caractéristique d'objet décrivant l'objet (36), pour comparer la caractéristique d'objet (36) avec plusieurs caractéristiques de classe (32), dont chacune est caractéristique d'une parmi plusieurs classes d'objets, et pour affecter l'objet (4) à au moins une classe sur la base du résultat de la comparaison, et comportant un dispositif de tri (24) pour trier les objets (4) selon l'affectation de classe sur différentes unités de transport (14d),
les objets (4) étant des emballages constitués de plusieurs produits individuels identiques (6) emballés ensemble dans l'emballage et les classes d'objets étant des types d'emballage.
